# EUROPÄISCHE PATENTANMELDUNG

(11) **EP 3 107 260 A1**
(43) Veröffentlichungstag der Anmeldung: **21.12.2016**
(21) Anmeldenummer: 16173109.6
(22) Anmeldetag: 06.06.2016
(51) Int. Cl.: H04L 29/06

(54) **VERFAHREN ZUM AUFBAU EINER TELEKOMMUNIKATIONSVERBINDUNG IN EINEM TELEKOMMUNIKATIONSSYSTEM UND TELEKOMMUNIKATIONSSYSTEM**

(30) Priorität: 18.06.2015 DE 102015007857
(71) Anmelder: Unify Patente GmbH & Co. KG, 80807 München (DE)
(72) Erfinder: RIST, Claus, 44797 Bochum (DE); WILLMANN, Michael, 58454 Witten (DE); GLASER, Martin, 59192 Bergkamen (DE); VOLKMANN, Michael, 58313 Herdecke (DE)
(74) Vertreter: Fritzsche, Thomas

(57) **Zusammenfassung**

In einem Telekommunikationssystem, welches mehrere in einem Netzverbund angeordnete Vermittlungsknoten (10, 20, 30) mit einem jeweiligen lokalen Server (C1, C2, C3) und zugeordneten Endgeräten (D1, D2, D3, D4) und einen zentralen DSS-Server (DSS) zur Steuerung des Telekommunikationssystems unter Verwendung eines allgemeinen Vermittlungsprotokolls umfasst, werden die Endgeräte (D1, D2, D3, D4) eines Vermittlungsknotens (10, 20, 30) durch den lokalen Server (C1, C2, C3) unter einem lokalen Protokoll gesteuert, das Steuerungsbefehle zur knoteninternen Anrufübernahme umfasst. Eine Anrufübernahme eines von einem dritten Endgerät (D4) an ein einem ersten Vermittlungsknoten (10) zugeordnetes erstes Endgerät (D3) gerichteten Anrufs durch ein einem anderen, zweiten Vermittlungsknoten (20) zugeordnetes zweites Endgerät (D1) erfolgt knotenübergreifend unter Verwendung des allgemeinen Vermittlungsprotokolls, indem die im lokalen Protokoll zur Anrufübernahme vorgesehenen Steuerungsbefehle in das allgemeine Vermittlungsprotokoll umgesetzt und durch den zentralen DSS-Server (DSS) den mehreren innerhalb des Netzverbundes angeordneten Vermittlungsknoten (10, 20, 30) knotenübergreifend zur Verfügung gestellt werden und die im lokalen Protokoll vorgesehene Registrierung eines Endgeräts (D1, D2, D3, D4) zur Anrufübernahme in das allgemeine Vermittlungsprotokoll umgesetzt und an den zentralen DSS-Server weitergeleitet wird.

## Beschreibung

Die vorliegende Erfindung betrifft ein Verfahren zum Aufbau einer Telekommunikationsverbindung in einem Telekommunikationssystem gemäß dem Oberbegriff des Anspruchs 1 und ein Telekommunikationssystem als solches gemäß dem Oberbegriff des Anspruchs 10. Insbesondere betrifft die Erfindung den Aufbau einer Telekommunikationsverbindung in einem Telekommunikationssystem durch Anrufübernahme.

Moderne Telekommunikationssysteme, *wie bei IP-basierten,* umfassen einen Netzverbund und mehrere innerhalb des Netzverbundes angeordnete Vermittlungsknoten mit einem jeweiligen lokalen Server und zugeordneten Endgeräten, sowie einen zentralen DSS-Server zur Steuerung des Telekommunikationssystems unter Verwendung eines allgemeinen Vermittlungsprotokolls. In der IP-Telefonie ist das "Session Initiation Protocol" (SIP) ein häufig angewandtes Protokoll zum Abbau einer Kommunikationssitzung zwischen zwei und mehr Teilnehmern. Das Protokoll wird u. a. im RFC 3261 sowie RFC 4235 und RFC 5359 spezifiziert. Im Zusammenhang mit der vorliegenden Erfindung wird ausdrücklich auf den Standard RFC 3261 und die darin genannten Aktualisierungen Bezug genommen, diese als bekannt vorausgesetzt und deren Offenbarung damit Teil der Offenbarung der vorliegenden Anmeldung. Es sei jedoch betont, dass außer Telefonie mit SIP Sitzungen beliebiger Art verwaltet werden können. Die "Payload" (Nutzlast) einer Sitzung, also die eigentlichen zu übertragenden Datenströme, können somit jedwede Datenströme sein, die sich über ein Netzwerk übertragen lassen.

SIP dient dazu, die Kommunikationsmodalitäten einer Sitzung zu vereinbaren bzw. auszuhandeln. Die eigentlichen Daten für die Kommunikation müssen über andere, dafür geeignete Protokolle ausgetauscht werden. Die Medien-Aushandlung ist somit kein eigentlicher Bestandteil von SIP, sondern wird durch die Einbettung eines weiteren Protokolls in SIP erreicht.

Ein weiteres Protokoll, das im Zusammenhang mit der vorliegenden Erfindung ausdrücklich durch Bezugnahme Teil der Offenbarung der vorliegenden Anmeldung wird, ist das Protokoll "Computer Supported Telecommunications Applications" (CSTA) gemäß den Standards ECMA-269 (Services for Computer Supported Telecommunications Applications (CSTA) Phase III), ECMA-323 (XML Protocol for Computer Supported Telecommunications Applications (CSTA) Phase III - CSTA XML) und ECMA-348 (Web Services Description Language (WSDL) for CSTA Phase III - CSTA Web Services), ECMA TR/87 (Using CSTA for SIP Phone User Agents - uaCSTA) bzw. ISO/IEC 18051 - CSTA Services [ECMA-269], ISO/IEC 18052 - CSTA-Protocol [ECMA-285], ISO/IEC TR 18053 - CSTA Glossary [ECMA TR/72], ISO/IEC 18056 - CSTA XML [ECMA-323], ISO/IEC 25437:- WS-Session - Web Services for Applications [ECMA-366] und der zugrundeliegenden Standards ECMA-217 (Architecture and Services for CSTA Phase II), ECMA-218 (application Layer Protocol (in ASN.1) for CSTA Phase II plus Protocol Implementation Conformance Statements (PICS)), ECMA-179 (Architecture and Services for CSTA Phase I), sowie ECMA-180 (Application Layer Protocol (in ASN.1) for CSTA Phase I plus Protocol Implementation Conformance Statements (PICS)). CSTA ist daher eine von der ECMA standardisierte Protokollspezifikation, die für den Datenverkehr zwischen einer Telefonanlage und Computerprogrammen verwendet wird. Das CSTA-Protokoll definiert die übertragenen Daten, nicht jedoch die Transportschicht. Zur Codierung der Datenströme werden Basic Encoding Rules (CSTA Phase I, II, und III) sowie XML Encoding Rules (CSTA Phase III) verwendet.

Herkömmlich werden bei Telekommunikationssystemen der hier beschriebenen Art, etwa bei Telefonen, nur die vermittlungstechnischen Zustände für die Endgeräte, sog. SIP-Endpoints, die sich innerhalb eines Knotens befinden, optisch via LED oder auf andere Weise signalisiert. Voraussetzung dafür ist, dass ein Teilnehmer einen sich innerhalb des eigenen Knotens befindlichen anderen Teilnehmer z.B. auf einer programmierbaren Taste seines SIP-Endpoints konfiguriert hat. Man spricht dann von einer "Presenceanzeigenden" BLF-Taste (BLF = busy lamp field). Der SIP-Endpoint hinterlegt auf dieser Taste die Rufnummer des programmierten anderenTeilnehmers.

Es können folgende vermittlungstechnische Zustände über die LEDs (oder entsprechende andere Elemente der Benutzeroberfläche) an den entsprechend programmierten BLF-Tasten signalisiert werden:
- Teilnehmer ist frei: BLF-Taste ist aus.
- Teilnehmer wird gerufen: BLF-Taste blinkt.
- Teilnehmer ist besetzt (z.B. führt ein Gespräch): BLF-Taste ist an.

Als weitere zusätzliche Leistungsmerkmale sind typischerweise möglich:
- Ein anderer Teilnehmer kann per Tastendruck vom SIP-Enpoint gerufen werden.
- Ein Gespräch kann von einem Teilnehmer durch den SIP-Endpoint übernommen werden.

Die Programmierung einer Rufnummer eines Teilnehmers, der sich in einem anderen Knoten befindet, ist bei manchen Systemen heute ebenfalls möglich, jedoch erfolgt dann keine BLF-Signalisierung des vermittlungstechnischen Zustandes, und in Folge dessen kann auch keine Weiterbehandlung wie z.B. die Gesprächsübernahme erfolgen.

Eine knotenübergreifende Anrufübernahme für SIP-Endpoints als solche ist aus US 2004/0086102 A1 bekannt. Bei der dort beschriebenen knotenübergreifenden Anrufübernahme wird ein Anruf über ein oder mehrere Netzwerke, von denen mindestens eines ein Datennetzwerk ist, von einem ersten Gerät zu einem zweiten Gerät geleitet. Dazu werden Informationen in Bezug auf die Anrufeinleitung zwischen dem ersten Gerät und dem zweiten Gerät gespeichert, eine Nachricht von einem dritten Gerät während der Anrufeinleitung empfangen, wobei die Nachricht eine Anrufübernahme-Anzeige enthält. Nach einem Abrufen der Informationen über die Anrufeinleitung zwischen dem erste Gerät und dem zweiten Gerät erfolgt basierend auf den abgerufenen Informationen ein Aufbau eines Anrufs zwischen dem ersten Gerät und dem dritten Gerät.

Die EP 1189406 A2 beschreibt ein verteiltes Kommunikationssystem, bestehend aus mehreren Kommunikationseinrichtungen und einer zentralen Datenverarbeitungseinrichtung, die über ein Netzwerk miteinander verbunden sind, bei dem auf der zentralen Datenverarbeitungseinrichtung eine zentrale Software-Schnittstelle vorhanden ist, durch die die einzelnen lokalen Software-Schnittstellen der verteilten Kommunikationseinrichtungen des Kommunikationssystems auf eine übergeordnete logische Schnittstelle abbildet werden. Dadurch erscheint das verteilte Kommunikationssystem für eine auf dem Server ablaufende Kommunikationsanwendung als eine Einheit, mit einer entsprechend hohen Anzahl an Hardware-Ressourcen, wie beispielsweise Teilnehmeranschlüssen, Amtsanschlüssen und Rufnummern.

Der Erfindung liegt die Aufgabe zugrunde, ein Verfahren zum Aufbau einer Telekommunikationsverbindung in einem Telekommunikationssystem, sowie auch ein Telekommunikationssystem als solches zu schaffen, bei denen der Aufbau einer Telekommunikationsverbindung durch Anrufübernahme auf einfache Weise unter Ausnutzung bereits bestehender Software-Resourcen knotenübergreifend möglich ist.

Die Aufgabe wird gelöst durch ein Verfahren zum Aufbau einer Telekommunikationsverbindung in einem Telekommunikationssystem gemäß Anspruch 1. Weiterhin wird die Aufgabe wird gelöst durch ein Telekommunikationssystem gemäß Anspruch 10. Weitere Gegenstände der Erfindung sind ein Computerprogrammprodukt zur Durchführung des Verfahrens sowie ein maschinenlesbarer Datenträger mit darauf gespeichertem Computerprogrammprodukt.

Durch die Erfindung wird ein Verfahren geschaffen zum Aufbau einer Telekommunikationsverbindung in einem Telekommunikationssystem, welches einen Netzverbund und mehrere innerhalb des Netzverbundes angeordnete Vermittlungsknoten mit einem jeweiligen lokalen Server und zugeordneten Endgeräten, sowie einen zentralen DSS-Server zur Steuerung des Telekommunikationssystems unter Verwendung eines allgemeinen Vermittlungsprotokolls umfasst, wobei die Teilnehmerendgeräte eines Vermittlungsknotens durch den lokalen Server unter einem lokalen Protokoll gesteuert werden, welches Steuerungsbefehle zur knoteninternen Anrufübernahme zwischen innerhalb des Knotens zur Anrufübernahme registrierten Endgeräten umfasst, und wobei die Telekommunikationsverbindung durch Anrufübernahme eines von einem dritten Endgerät an ein erstes Endgerät gerichteten Anrufs durch ein zweites Endgerät aufbaubar ist. Erfindungsgemäß ist es vorgesehen, dass das erste Endgerät einem ersten Vermittlungsknoten zugeordnet ist und das zweite Endgerät einem anderen, zweiten Vermittlungsknoten zugeordnet ist, und dass die Anrufübernahme des von dem dritten Endgerät an das erste Endgerät gerichteten Anrufs durch das zweite Endgerät somit knotenübergreifend unter Verwendung des allgemeinen Vermittlungsprotokolls erfolgt, wobei die im lokalen Protokoll zur Anrufübernahme vorgesehenen Steuerungsbefehle in das allgemeine Vermittlungsprotokoll umgesetzt und durch den zentralen DSS-Server den mehreren innerhalb des Netzverbundes angeordneten Vermittlungsknoten knotenübergreifend zur Verfügung gestellt werden, und wobei die im lokalen Protokoll vorgesehene Registrierung eines Teilnehmers zur Anrufübernahme in das allgemeine Vermittlungsprotokoll umgesetzt und an den zentralen DSS-Server weitergeleitet wird. Das heißt mit anderen Worten, dass erfindungsgemäß eine Anrufübernahme selbst dann möglich ist, wenn das dritte Endgerät einem dritten Vermittlungsknoten zugeordnet ist.

Gemäß der Erfindung kann es vorgesehen sein, dass bei Registrierung des ersten Endgeräts für eine Anrufübernahme durch das zweite Endgerät der lokale Server eine Überprüfung vornimmt, ob das zweite Endgerät demselben Vermittlungsknoten zugeordnet ist, und dass, wenn dies nicht der Fall ist, eine Registrierung des zweiten Endgerätes unter Verwendung des allgemeinen Vermittlungsprotokolls am zentralen DSS-Server vorgenommen wird.

Dabei kann vorgesehen sein, dass ein von dem dritten Endgerät an das erste Endgerät gerichteter Anruf vom zentralen Server erfasst und bei Registrierung des ersten Endgerätes für eine Anrufübernahme durch das zweite Endgerät vom zentralen Server eine entsprechende Nachricht an den lokalen Server des Vermittlungsknotens des zweiten Endgeräts gesendet und dem zweiten Endgerät signalisiert wird.

Gemäß einem Ausführungsbeispiel der Erfindung ist vorgesehen, dass mehrere Endgeräte mit einer einzigen Registrierung als zweite Endgeräte zur Anrufübernahme eines von einem dritten Endgerät an ein erstes Endgerät gerichteten Anrufs als Anrufübernahme-Gruppe am zentralen Server registriert werden.

Gemäß einem anderen Ausführungsbeispiel der Erfindung ist vorgesehen, dass das zweite Endgerät mit einer einzigen Registrierung zur Anrufübernahme von an mehrere erste Endgeräte gerichteten Anrufen am zentralen Server registriert wird. Dadurch kann vorteilhafterweise ein knotenübergreifender Group Pick-Up (Anrufübernahmegruppe), insbesondere für SIP-Endpoints, ermöglicht werden. Somit können sich SIP-Endpoints auch knotenübergreifend für das SIP-Endpoint-Leistungsmerkmal "Anrufübernahme Gruppe" registrieren.

Gemäß einem vorteilhaften Ausführungsbeispiel der Erfindung ist vorgesehen, dass das allgemeine Vermittlungsprotokoll CSTA ist, und dass das lokale Vermittlungsprotokoll SIP oder ein vergleichbares Protokoll ist, und dass bei einem von einem dritten Endgerät an ein erstes Endgerät gerichteten Anruf zur Anrufübernahme durch ein zweites Endgerät über CSTA eine knotenübergreifende Signalisierung zum zentralen DSS-Server (DSS) erfolgt, und vom zentralen DSS-Server (DSS) anhand "CSTA: Delivered Events" am zweiten Endgerät "CSTA: SetLampMode" aktiviert wird. Während herkömmlich ein bestimmtes Leistungsmerkmal über zusätzliche SIP-Mittel in der Vernetzung realisiert werden muß und somit jedes neue Leistungsmerkmal auch erweiterte SIP-Mittel erfordert, reichen erfindungsgemäß die bekannten SIP-Mittel aus, d.h. sie erlauben den Einsatz von Standard-SIP und bedienen sich stattdessen der Vielfältigkeit des CSTA-Protokolls. Vorteilhafterweise werden dadurch knotenübergreifender Pick-Up (BLF-Signalisierung) und Gesprächsübernahme durch SIP-Endpoints über SIP-Standard-Protokollelemente mittels CSTA vereinfacht ermöglicht. Auch können allgemeine Stimulus-Leistungsmerkmale auf SIP-Endpoints abgebildet werden. Außerdem ist es nicht erforderlich, CSTA über SIP zu tunneln, dadurch werden Standard-SIP-Endpoints in die Lage versetzt, knotenübergreifende Leistungsmerkmale auszuführen.

Dabei kann das zweite Endgerät ein SIP-Endpoint sein und der an diesem vom dritten Endgerät an ein erstes Endgerät gerichtete Anruf mittels "SIP: Notify" signalisiert und durch "SIP: Invite" übernommen werden.

Weiterhin wird durch die Erfindung ein Computerprogrammprodukt zur Durchführung des erfindungsgemäßen Verfahrens geschaffen.

Weiterhin wird durch die Erfindung ein maschinenlesbarer Datenträger mit darauf gespeichertem Computerprogrammprodukt zur Durchführung des erfindungsgemäßen Verfahrens geschaffen.

Weiterhin wird durch die Erfindung ein Telekommunikationssystem geschaffen, welches einen Netzverbund und mehrere innerhalb des Netzverbundes angeordnete Vermittlungsknoten mit einem jeweiligen lokalen Server und zugeordneten Endgeräten, sowie einen zentralen DSS-Server zur Steuerung des Telekommunikationssystems unter Verwendung eines allgemeinen Vermittlungsprotokolls umfasst, wobei die Endgeräte eines Vermittlungsknotens durch den lokalen Server unter einem lokalen Protokoll gesteuert werden, welches Steuerungsbefehle zur knoteninternen Anrufübernahme zwischen innerhalb des Knotens zur Anrufübernahme registrierten Endgeräten umfasst, wobei eine Telekommunikationsverbindung durch Anrufübernahme eines von einem dritten Endgerät an ein erstes Endgerät gerichteten Anrufs zu einem zweiten Endgerät aufbaubar ist. Gemäß der Erfindung sind der zentrale DSS-Server und die mehreren innerhalb des Netzverbundes angeordneten Vermittlungsknoten dazu vorgesehen, die im lokalen Protokoll zur Anrufübernahme vorgesehenen Steuerungsbefehle in das allgemeine Vermittlungsprotokoll umzusetzen und durch den zentralen DSS-Server den mehreren innerhalb des Netzverbundes angeordneten Vermittlungsknoten knotenübergreifend zur Verfügung zu stellen, wobei die im lokalen Protokoll vorgesehene Registrierung eines Endgeräts zur Anrufübernahme in das allgemeine Vermittlungsprotokoll umgesetzt und an den zentralen DSS-Server weitergeleitet wird, wobei eine Telekommunikationsverbindung durch Anrufübernahme des von dem dritten Endgerät an ein einem ersten Vermittlungsknoten zugeordnetes erstes Endgerät gerichteten Anrufs zu einem einem anderen, zweiten Vermittlungsknoten zugeordneten zweiten Endgerät knotenübergreifend signalisierbar und aufbaubar ist, wobei das Telekommunikationssystem zur Durchführung des erfindungsgemäßen Verfahrens vorgesehen bzw. ausgebildet ist.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:

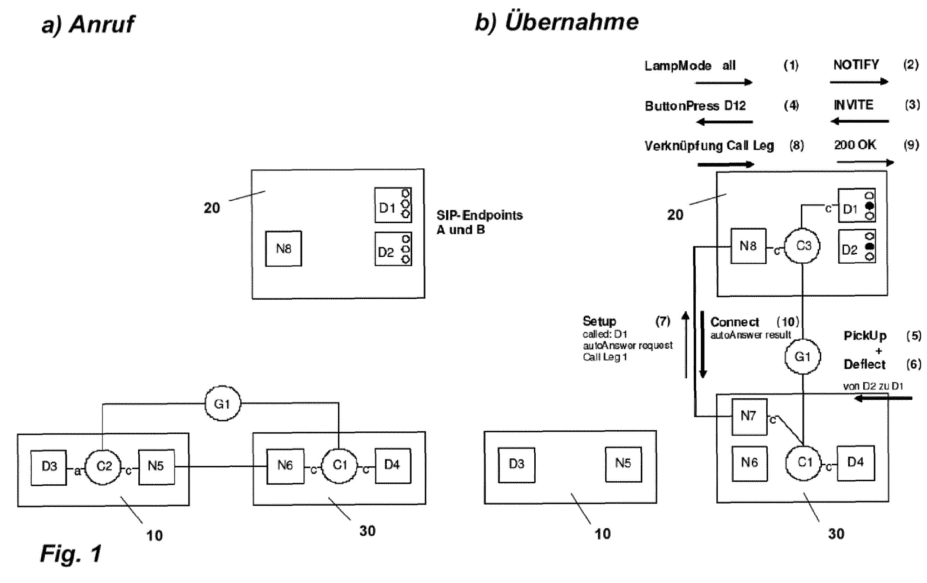

- Fig. 1: ein vereinfachtes Blockdiagramm, das schematisch einen Verbund von Knoten in einer LAN-Umgebung zur Erläuterung eines Verfahrens zum Aufbau einer Telekommunikationsverbindung in einem Telekommunikationssystem und eines Telekommunikationssystem als solchem gemäß Ausführungsbeispielen der Erfindung darstellt;

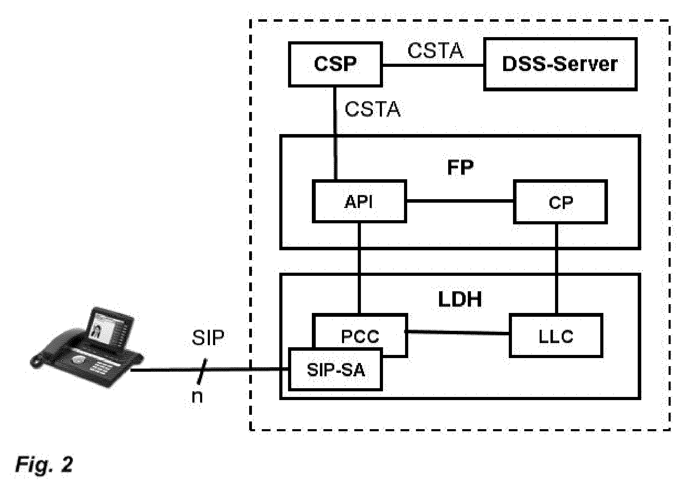

- Fig. 2: ein vereinfachtes Blockdiagramm, das schematisch die im wesentlichen in einem Verfahrens zum Aufbau einer Telekommunikationsverbindung in einem Telekommunikationssystem und in einem Telekommunikationssystem als solchem beteiligten OSBiz (OpenScape Business) Systemkomponenten gemäß einem Ausführungsbeispiel der Erfindung darstellt;

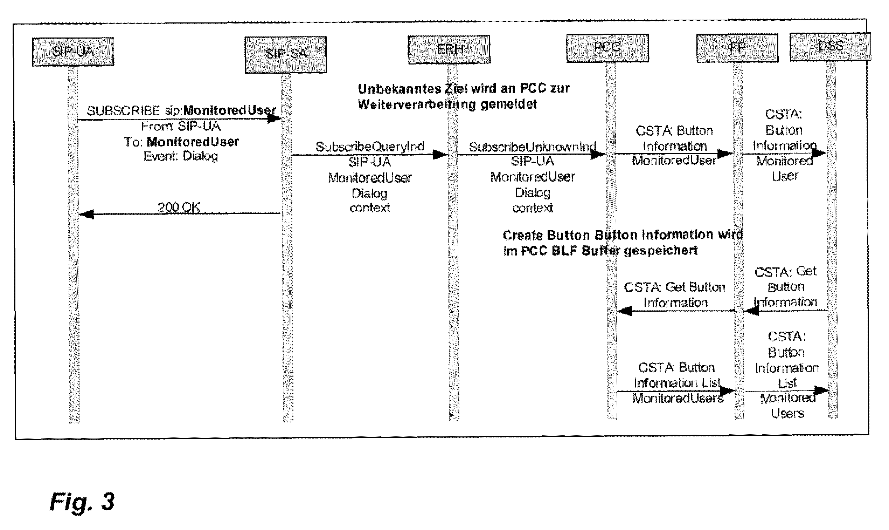

- Fig. 3: ein vereinfachtes Blockdiagramm, das schematisch die Registrierung für eine knotenübergreifende Anrufübernahme bei einem Verfahren zum Aufbau einer Telekommunikationsverbindung in einem Telekommunikationssystem gemäß einem Ausführungsbeispiel der Erfindung darstellt;

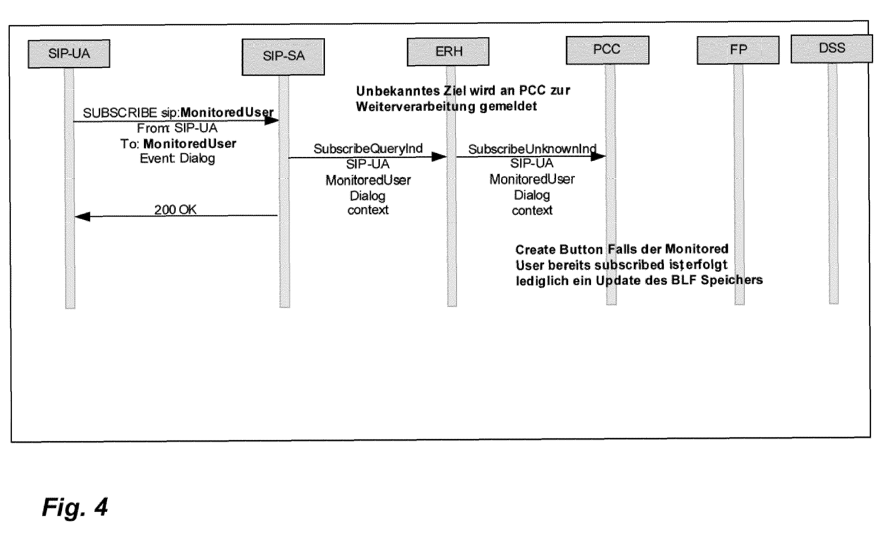

- Fig. 4: ein vereinfachtes Blockdiagramm, das schematisch nur eine Registrierung pro netzweitem Teilnehmer je Knoten an den DSS-Server für eine knotenübergreifende Anrufübernahme bei einem Verfahren zum Aufbau einer Telekommunikationsverbindung in einem Telekommunikationssystem gemäß einem Ausführungsbeispiel der Erfindung darstellt.

In Fig. 1 ist ein Verbund von Knoten in einer LAN-Umgebung dargestellt. Es ist ein Telekommunikationssystem gezeigt, welches einen Netzverbund und mehrere innerhalb des Netzverbundes angeordnete Vermittlungsknoten 10, 20, 30 mit einem jeweiligen lokalen Server C1, C2, C3 und zugeordneten Endgeräten D1, D2, D3, D4 sowie einen zentralen DSS-Server DSS zur Steuerung des Telekommunikationssystems unter Verwendung eines allgemeinen Vermittlungsprotokolls mit Netzwerkleitungen N5, N6, N7 und N8 umfasst. Die Teilnehmerendgeräte (nachfolgend auch kurz "Endgeräte") D1 ... D4 eines Vermittlungsknotens 10, 20, 30 werden durch den lokalen Server C1, C2, C3 unter einem lokalen Protokoll gesteuert. Ein zentraler DSS-Server (Direct Station Selection Server), der gemäß der Beschreibung in der DE 10149983 A1 für die Bereitstellung der knotenübergreifenden Presence-Information zuständig ist, ist üblicherweise in jedem Knoten 10, 20, 30 vorhanden, läuft jedoch erfindungsgemäß vorzugsweise nur im gemäß Konfiguration festgelegten Hauptknoten. Gemäß dem CSTA-Standard ECMA-269 steht generell C für Call (also Anruf), D für Device (also Endgerät) und N für Network Trunk (also eine Netzwerkleitung).

Die Teilnehmerendgeräte D1 ... D4 eines Vermittlungsknotens 10, 20, 30 werden durch den lokalen Server C1, C2, C3 unter einem lokalen Protokoll gesteuert, welches Steuerungsbefehle zur knoteninternen Anrufübernahme zwischen innerhalb des Knotens zur Anrufübernahme registrierten Endgeräten umfasst, und kommunizieren über den jeweiligen Vermittlungsknoten 10, 20, 30 zugeordnete Schnittstellen N5, N6, N7, N8 (im Spezialfall sind das die genannten Netzwerkleitungen).

Innerhalb des Telekommunikationssystems soll eine Telekommunikationsverbindung durch Anrufübernahme eines von einem dritten Endgerät D4 an ein erstes Endgerät D3 gerichteten Anrufs durch ein zweites Endgerät D1 aufbaubar sein, auch wenn das erste Endgerät D3 und das zweite Endgerät D1 sich in verschiedenen Knoten befinden.

Somit ist eine Telekommunikationsverbindung durch Anrufübernahme eines von einem dritten Endgerät D4 an ein erstes Endgerät D3 gerichteten Anrufs durch das zweite Endgerät D1 aufbaubar, wobei das erste Endgerät D3 einem ersten Vermittlungsknoten 10 zugeordnet ist und das zweite Endgerät D1 einem anderen, zweiten Vermittlungsknoten 20 zugeordnet ist. Die Anrufübernahme des von dem dritten Endgerät D4 an das erste Endgerät D3 gerichteten Anrufs durch das zweite Endgerät D1 erfolgt somit knotenübergreifend unter Verwendung des allgemeinen Vermittlungsprotokolls, wobei die im lokalen Protokoll zur Anrufübernahme vorgesehenen Steuerungsbefehle in das allgemeine Vermittlungsprotokoll umgesetzt und durch den zentralen DSS-Server DSS den mehreren innerhalb des Netzverbundes angeordneten Vermittlungsknoten 10, 20, 30 knotenübergreifend zur Verfügung gestellt werden. Dabei wird die im lokalen Protokoll vorgesehene Registrierung eines Endgeräts zur Anrufübernahme in das allgemeine Vermittlungsprotokoll umgesetzt und an den zentralen DSS-Server DSS weitergeleitet.

Voraussetzung für die Funktionalität des DSS-Servers ist die Programmierung der Rufnummer des Teilnehmers D3 des ersten Vermittlungsknotens 10 bei den SIP-Endpoints D1 und D2 im zweiten Vermittlungsknoten 20. Ändert sich beim Teilnehmer D3 der vermittlungstechnische Zustand, wie zum Beispiel durch Abheben der Handapparates, erfordert dies ein ständiges Leuchten des BLF der SIP-Endpoints D1 und D2, welches knotenübergreifend zu signalisieren ist.

Gemäß einem Ausführungsbeispiel sind im Falle von Telefonie folgende Signalisierungsarten möglich:
- Teilnehmer ist frei -> BLF ist aus
- Teilnehmer wird gerufen -> BLF blinkt
- Teilnehmer ist besetzt (z.B. führt ein Gespräch) -> BLF ist an

Wird der Teilnehmer D3 des ersten Vermittlungsknotens 10 gerufen, so kann nun das Gespräch aus dem Netzverbund heraus von einem der SIP-Endpoints D1 oder D2 im zweiten Vermittlungsknoten 20 übernommen werden.

### C1, C2 und C3 sind gemäß dem CSTA-Standard ECMA-269 die Hilfsmittel zur lokalen Verbindung der Devices Dn und Netzwerkleitungen Nn.

Fig. 2 zeigt im Überblick die beteiligten OSBiz (OpenScape Business)-Systemkomponenten gemäß einem Ausführungsbeispiel eines Verfahrens zum Aufbau einer Telekommunikationsverbindung in einem Telekommunikationssystem und eines Telekommunikationssystem als solchem. Gemäß einem Ausführungsbeispiel ist das allgemeine Vermittlungsprotokoll CSTA, und das lokale Vermittlungsprotokoll ist SIP oder ein vergleichbares Protokoll.

Im Feature Processing FP der OSBiz wird CSTA über die Komponente Applikationsschnittstelle (Application Interface) API an die Vermittlungstechnik (Call Processing) CP angebunden. Der DSS-Server kommuniziert mit der Vermittlungstechnik CP mittels CSTA über Middleware-Komponenten CSP und dem Application Interface API.

Der LAN Device Handler (LDH) erlaubt die Kommunikation von SIP-Endpoints mit der Plattform über die SIP-Komponente SIP Stack Adapter SIP-SA. Der SIP-SA kommuniziert über das LAN Leg Control (LLC) mit dem CP. Dabei verwaltet das LAN Leg Control (LLC) die Payload zwischen LAN/LAN- und LAN/TDM-Verbindungen. CSTA-Unterstützung für SIP-Endpoints erfolgt über die an den SIP-SA und das Application Interface angebundene 3rd Party Call Control Interface PCC. Nicht dargestellt ist eine Registrierungskomponente (ERH), welche mit der SIP-Komponente zu Registrierungszwecken von IP-Endpoints kommuniziert.

In Fig. 3 zeigt ein vereinfachtes Blockdiagramm schematisch die Registrierung für eine knotenübergreifende Anrufübernahme bei einem Verfahren zum Aufbau einer Telekommunikationsverbindung in einem Telekommunikationssystem gemäß einem Ausführungsbeispiel.

Der SIP-Endpoint registriert seine BLF-Taste beim zugehörigen Knoten mittels SIP: Subscribe. Ist die Rufnummer kein Ziel innerhalb dieses Knotens, so wird die Registrierung wie im Falle der OSBiz ignoriert oder optional abgewiesen.

Stattdessen wird nun der Registrierungswunsch an die PCC-Komponente weitergeleitet und, sofern es sich um eine wählbare Rufnummer im Netzverbund handelt, der BLF Button (bzw. BLF-Taste) software-technisch erzeugt (Create Button) und mittels CSTA: Button Information Event an den DSS-Server übermittelt und somit bekannt gemacht. Der DSS-Server synchronisiert sich mittels CSTA: GetButtonlnformation und CSTA: ButtonInformationList.

Create Button: zu Zwecken der Synchronisation und Optimierung werden die extern registrierten BLF-Ziele in der PCC-Komponente (3rd Party Call Control Interface) abgespeichert.

Die vermittlungstechnischen Zustände der BLF-Ziele werden durch Verwendung der sogenannten CSTA: Call Control Events vom DSS-Server erfasst und in entsprechende Kommandos für die LED-Steuerung mittels CSTA: SetLampMode umgesetzt, vergl. Fig. 1. Für den registrierten SIP-Endpoint bedeutet dieses nun eine Umsetzung in eine SIP: Notify, um die BLF-Taste des SIP-Endpoints anzureizen.

Gemäß einer Ausführung kann, statt jede BLF-Taste einzeln zu registrieren, durch die OSBiz nur eine Registrierung pro netzweiten Teilnehmer je Knoten an den DSS-Server weitergeleitet werden. Weitere Registrierungen werden vorzugsweise in der PCC-Komponente gespeichert (Create Button), um im Falle der Signalisierung des Vermittlungszustandes stellvertretend alle lokalen SIP-Endpoints anzureizen.

Das zweite Endgerät kann somit mit einer einzigen Registrierung zur Anrufübernahme von an mehrere erste Endgeräte gerichteten Anrufen am zentralen Server registriert werden. Dadurch werden ein knotenübergreifender Group Pick-Up (Anrufübernahmegruppe), insbesondere für SIP-Endpoints ermöglicht, und es können sich SIP-Endpoints auch knotenübergreifend für das SIP-Endpoint-Leistungsmerkmal "Anrufübernahme Gruppe" registrieren.

Nun wieder bezugnehmend auf Fig. 1 und die nachfolgend wiedergegebenen Tabellen soll ein Beispiel einer knotenübergreifenden Anrufübernahme (knotenübergreifender Pick-Up) beschrieben werden. Wird der Teilnehmer D3 (erstes Endgerät) des ersten Vermittlungsknotens 10 von einem dritten Teilnehmer D4 (drittes endgerät) des dritten Vermittlungsknotens 30 gerufen, so erfolgt über CSTA die knotenübergreifende Signalisierung zum DSS-Server. Der DSS-Server überprüft anhand des CSTA: Delivered Events und der an den Endgeräten programmierten DSS-Tasten, welche LEDs nun mittels CSTA: SetLampMode (1) zu aktivieren sind. Im Falle der SIP-Endpoints D1 und D2 ist diese Information für die BLF-Steuerung durch die PCC-Komponente in eine SIP: Notify (2) umzusetzen.

Will nun SIP-Endpoint D1 (zweiter Teilnehmer) das Gespräch per Tastendruck übernehmen, sendet der SIP-Endpoint D1 eine entsprechende SIP: Invite. Für die Anrufübernahme entsteht somit ein sog. "Call Leg". Der Anrufübernahmewunsch von D1 ist durch die PCC-Komponente (3rd Party Call Control Interface) als knotenübergreifend zu identifizieren und wird per CSTA: Button Press Event (4) mit hinzufügen der Call Leg Information nun an den DSS-Server weitergeleitet.

Der ausgewählte Ruf (5) wird nun die Netzwerkressourcen schonend über das an sich bekannte "single system image" Verfahren der OSBiz unter Ausnutzung des globalen Parameters G1 durch den DSS-Server auf den dritten vermittlungsknoten 30 abgesetzt (6). Das anfordernde Call Leg des SIP-Endpoints wird nun transparent über das Netzwerkprotokoll mit der Aufforderung zur automatischen Rufannahme an Knoten 1 übertragen (7). Damit wird in Knoten 1 nur der ausgewählte Call des SIP-Endpoints A (8) angereizt und sofort verbunden (9). Eventuell andere Call Legs des SIP-Endpoints werden bei der Belegung somit nicht berücksichtigt.

Gemäß einer Ausführungsform läßt sich das Verfahren auch für das Leistungsmerkmal der Anrufübernahme von Gruppen 'Group Pick-Up' (Knotenübergreifender Group Pick-Up) anwenden. Der Unterschied liegt hier bei der Registrierung und der eigentlichen Anrufübernahme. In beiden Fällen wird die entsprechende SIP Signalisierung wie vorher beschrieben auf den SIP Pick-Up abgebildet und im DSS-Server mittels CSTA entsprechend umgesetzt.

Im folgenden werden nun tabellarisch die wesentlichen Elemente der Meldungen (1) bis (10) für ein Ausführungsbeispiel detailliert beschrieben, bei dem das allgemeine Vermittlungsprotokoll CSTA ist, und das lokale Vermittlungsprotokoll SIP oder oder ein vergleichbares Protokoll ist, wobei für einen von einem dritten Endgerät an ein erstes Endgerät gerichteten Anruf eine Anrufübernahme durch ein zweites Endgerät über CSTA eine knotenübergreifende Signalisierung zum zentralen DSS-Server (DSS) erfolgt:
- *Meldung (1): CSTA SetLampMode*
   *wird gemäß ECMA-269 Kapitel 21.1.17 protokollkonform angewendet und dazu verwendet, die LEDs der zugehörigen DSS-Tasten zu steuern.*
- *Meldung (2): SIP NOTIFY*
   *wird protokollkonform angewendet, und dazu verwendet das BLF-Steuern.*
- *Meldung (3): SIP INVITE*
   *wird protokollkonform angewendet und dazu verwendet, den Pickup anzufordern. Hierbei entsteht ein Call Leg.*
- *Meldung (4): CSTA ButtonPressEvent*
   *wird gemäß ECMA-269 Kapitel 21.2.2 protokollkonform erweitert angewendet und dazu verwendet, den Pick-Up-Wunsch für die entstandene Call Leg zu identifizieren.*
- *Meldung (5): CSTA DirectedPickupCall*
   *wird aus Sicht der Applikation (hier: DSS-Server) gemäß ECMA-269 Kapitel 17.1.13 angewendet. Innerhalb der OpenScape Business befindet sich jedoch eine bereits im Markt befindliche bekannte Umsetzung auf die Meldung (6).*
- *Meldung (6): CSTA DeflectCall*
   *wird gemäß ECMA-269 Kapitel 17.1.11 protokollkonform erweitert angewendet und dazu verwendet, den Anruf ressourcenschonend direkt vom Knoten des Anrufers an den Knoten des Übernehmenden weiterzuleiten. Die bereits im Markt befindliche Indikation der sofortigen Rufannahme (autoAnswer) sorgt für die direkte Gesprächsdurchschaltung. Zusätzlich erfogt vorzugsweise die Indikation des Call Leg.*
- *Meldung (7): SIP-Q Setup*
   *enthält neben der Adressierung des SIP-Devices die autoAnswer und Call Leg Indikation.*
- *Meldung (8): Call Processing Verknüpfung Call Leg*
   *ist eine systeminterne rein proprietäre Meldung, die allerdings nun neu unter Anwendung des Call Leg die Antwort auf Meldung (3) erfüllt.*
- *Meldung (9): SIP 200 OK*
   *wird mit der autoAnswer Option protokollkonform angewendet und dazu, um das Gespräch automatisch durchzuschalten.*
- *Meldung (10): CorNet-NQ Connect*
   *enthält wie bisher protokollkonform das logische Device in der Connected Number.*

Die auf den folgenden beiden Seiten wiedergegebenen Tabellen schließlich dienen der Erläuterung des CSTA- und SIP-Meldungsaufkommens basierend auf dem bekannten 'single-system-image' einer OSBiz, bei dem die lokale Call ID durch die globale Call ID durch die Middleware moduliert wird, gemäß einem weiteren Ausführungsbeispiel:

| **Meldungen** | **SIP-Endpoint A** | **SIP-Endpoint B** | **Tln C** | **Tln X** | **Kommentar/Aktion** | |
|---|---|---|---|---|---|---|
| **(s. Kapitel 3)** | **Device D1** | **Device D2** | **Device D3** | **Device D4** | | |
| | | | | | **übliche Signalisierung für netzübergreifende Anrufe** | |
| **CSTA: DeliveredEvent** | | | | | | |
| • connection | | | D3G1 | D3G1 | CSTA: Delivered Event Tln X ruft Tln C | |
| • alertingDevice | | | D3 | D3 | | |
| • callingDevice | | | D4 | D4 | | |
| • calledDevice | | | D3 | D3 | | |
| **CSTA:SetLampModeRequest (1)** | | | | | | CSTA ↓ SIP |
| • device | D1 | D2 | | | DSS-Server schaltet die LED blinkend | |
| • lamp | ID | ID | | | | |
| • lampMode | wink | wink | | | optional: optimiert nur für eine Registrierung je Knoten | |
| **CSTA: SetLampModeResult** | | | | | | |
| **SIP: NOTIFY (2)** | | | | | | |
| • from | BLF User <state> | BLF User <state> | | | BLF Signalisierung bei den SIP-Endpoints A und B | |
| • dialog-info | early | early | | | | |
| **SIP: INVITE (3)** | | | | | | SIP ↓ CSTA |
| • from | D1 | | | | Anrufübernahme durch SIP-EnpointA auf Call Leg 1 | |
| • to | pickup D3 | | | | | |
| **CSTA: ButtonPressEvent (4)** | | | | | | |
| • device | D1 | | | | | |
| • button | ID | | | | | |
| • privateData callLeg | Call Leg 1 | | | | | |
| **CSTA: DirectedPickupCallRequest (5)** | | | | | | |
| • callToBePickedUp | D3G1 | | | | DSS-Server erkennt Pick-Up Wunsch und setzt das entsprechende CSTA Pick-Up Kommando ab. | |
| • newDestination | D1 | | | | | |
| • privateData callLeg | Call Leg 1 | | | | | |
| **CSTA: DirectedPickupCallResult** | | | | | | |
| • pickedCall | D1G1 | | | | | |
| **CSTA: DeflectCallRequest (6)** | | | | | | |
| • callToBeDiverted | | | | N6C1 | Umsetzung des CSTA Kommandos Pick-Up auf das,,single system image" durch die Middleware auf den lokalen Knoten von Tln X | |
| • newDestination | | | | D1 | | |
| • privateData autoAnswer callLeg | | | | True Call Leg 1 | | |
| **CSTA: DeflectCallResult** | | | | | | |
| (7) | | | | | | |
| | | | | | Die SIP-Q Setup mit Anforderung zur automatischen Rufannahme durch SIP-Endpoint A wird zum Knoten 1 gesendet. | |
| | | | | | Dabei ist die Call Leg 1 transparent durchreichen | |
| **CSTA: DivertedEvent** | | | | | | |
| • divertingConnection | | | D3G1 | D3G1 | CSTA: Anruf wurde zu SIP-Endpoint A weitergeleitet | |
| • divertingDevice | | | D3 | D3 | | |
| • newDestination | | | D1 | D1 | | |
| **SIP: 200 OK** | | | | | | |
| • from | D3 | | | | Call Leg 1 wird zur Identifizierung des Call am SIP-Endpoint A genutzt. | |
| • to | D1 | | | | | |
| (8) | | | | | SIP-Q Connect der automatischen Rufannahme wird zum Tln X gesendet | |
| **CSTA: EstablishedEvent** | | | | | | |
| • establishedConnection | D1G1 | | | D1G1 | CSTA: Anruf wurde durch SIP-Endpoint A angenommen | |
| • answeringDevice | D1 | | | D1 | | |
| • callingDevice | D4 | | | D4 | | |
| • calledDevice | D3 | | | D3 | | |

Typischerweise registrieren sich SIP-Endpoints über SIP: Subscribe für ein Leistungsmerkmal bei ihrem zugeordneten OSBiz-Knoten. Hierzu müssen herkömmlich im Falle des Pick-up (Anrufübernahme) der Einleitende und das Ziel bei demselben OSBiz-Knoten registriert sein. Ist das der Fall, so kann die OSBiz die vermittlungstechnischen Änderungen des Ziels an den Einleitenden mittels SIP: Notify mitteilen. Im Anwendungsfall kann der SIP-Endpoint einen Anruf beim Ziel mittels eines funktionalen Ablaufs im SIP Protokoll (hier SIP: Invite) die OSBiz protokollkonform anreizen und das Gespräch übernehmen. Für den Pick-up in der Vernetzung stellt z.B. OSBiz bereits heute einen DSS-Server zur Verfügung. Der DSS-Server verwendet hierbei CSTA, um den Pick-up bei der Vernetzung der OSBiz zu steuern.

Die Erfindung erlaubt insbesondere, die SIP-Registrierung von knotenfernen Zielen in geeigneter Weise in CSTA umzusetzen und an den DSS-Server weiterzuleiten. Mit erfolgter Registrierung wird der DSS-Server in die Lage versetzt, die vermittlungstechnischen Zustände des knotenfernen Ziels an den Einleitenden weiterzuleiten und Pick-up Anforderungen des SIP-Endpoints auszuführen. Hierzu erfolgt vorzugsweise eine Umsetzung des funktionalen SIP-Protokolls z.B. auf die an sich bekannten Stimulus-Eigenschaften der OSBiz-Systemendgeräte (UP0/E und HFA) mittels ausgewählter CSTA-Services und CSTA-Events. Dies umfasst die Möglichkeit des Broadcast, d.h. eine Registrierung per Ziel je OSBiz Knoten beim DSS-Server ist ausreichend um für mehrere Einleitende dasselbe Ziel auszuwählen.

Es ist festzuhalten, dass die unter Bezug auf die dargestellten Ausführungsformen beschriebenen Merkmale der Erfindung, wie beispielsweise die Art und Ausgestaltung der Meldungen, Protokolle und sonstigen Details, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

Die nachfolgende Bezugszeichenliste ist als integraler Bestandteil der Beschreibung anzusehen.

### Bezugszeichenliste/Abkürzungen

- 10,20,30: Vermittlungsknoten
- API: Applikationsschnittstelle (Application Interface)
- C1, C2, C3: lokaler Server
- CP: Call Processing (Vermittlungstechnik)
- CSP D1, D2, D3, D4: Endgerät
- N5, N6, N7, N8: Schnittstelle/Netzwerkleitung
- DSS: zentraler DSS-Server
- ERH: Registrierungskomponente
- FP: Merkmalsverarbeitung (Feature Processing)
- G1: globaler Parameter
- LLC: LAN Leg Control
- LDH: LAN Device Handler

## Patentansprüche

1. Verfahren zum Aufbau einer Telekommunikationsverbindung in einem Telekommunikationssystem, welches einen Netzverbund und mehrere innerhalb des Netzverbundes angeordnete Vermittlungsknoten (10, 20, 30) mit einem jeweiligen lokalen Server (C1, C2, C3) und zugeordneten Endgeräten (D1, D2, D3, D4), sowie einen zentralen DSS-Server (DSS) zur Steuerung des Telekommunikationssystems unter Verwendung eines allgemeinen Vermittlungsprotokolls umfasst, wobei die Teilnehmerendgeräte (D1, D2, D3, D4) eines Vermittlungsknotens (10, 20, 30) durch den lokalen Server (C1, C2, C3) unter einem lokalen Protokoll gesteuert werden, welches Steuerungsbefehle zur knoteninternen Anrufübernahme zwischen innerhalb des Vermittlungsknotens (10, 20, 30) zur Anrufübernahme registrierten Endgeräten (D1, D2, D3, D4) umfasst, und wobei die Telekommunikationsverbindung durch Anrufübernahme eines von einem dritten Endgerät (D4) an ein erstes Endgerät (D3) gerichteten Anrufs durch ein zweites Endgerät (D1) aufbaubar ist, **dadurch gekennzeichnet,**
**dass** das erste Endgerät (D3) einem ersten Vermittlungsknoten (10) zugeordnet ist und das zweite Endgerät (D1) einem anderen, zweiten Vermittlungsknoten (20) zugeordnet ist, und
**dass** die Anrufübernahme des von dem dritten Endgerät (D4) an das erste Endgerät (D3) gerichteten Anrufs durch das zweite Endgerät (D1) knotenübergreifend unter Verwendung des allgemeinen Vermittlungsprotokolls erfolgt,
wobei die im lokalen Protokoll zur Anrufübernahme vorgesehenen Steuerungsbefehle in das allgemeine Vermittlungsprotokoll umgesetzt und durch den zentralen DSS-Server (DSS) den mehreren innerhalb des Netzverbundes angeordneten Vermittlungsknoten (10, 20, 30) knotenübergreifend zur Verfügung gestellt werden, und
wobei die im lokalen Protokoll vorgesehene Registrierung eines Endgeräts (D1, D2, D3, D4) zur Anrufübernahme in das allgemeine Vermittlungsprotokoll umgesetzt und an den zentralen DSS-Server (DSS) weitergeleitet wird.

2. Verfahren nach Anspruch 1, **dadurch gekennzeichnet, dass** bei Registrierung des ersten Endgeräts (D3) für eine Anrufübernahme durch das zweite Endgerät (D1) der lokale Server (C2) eine Überprüfung vornimmt, ob das zweite Endgerät (D1) demselben Vermittlungsknoten (10) zugeordnet ist, und dass, wenn dies nicht der Fall ist, eine Registrierung des zweiten Endgerätes (D1) unter Verwendung des allgemeinen Vermittlungsprotokolls am zentralen DSS-Server (DSS) vorgenommen wird.

3. Verfahren nach Anspruch 2, **dadurch gekennzeichnet, dass** ein von dem dritten Endgerät (D4) an das erste Endgerät (D3) gerichteter Anruf vom zentralen Server (DSS) erfasst und bei Registrierung des ersten Endgerätes (D3) für eine Anrufübernahme durch das zweite Endgerät (D1) vom zentralen Server (DSS) eine entsprechende Nachricht an den lokalen Server (C3) des Vermittlungsknotens (20) des zweiten Endgeräts (D1) gesendet und dem zweiten Endgerät signalisiert wird.

4. Verfahren nach Anspruch 2 und 3, **dadurch gekennzeichnet, dass** mehrere Endgeräte (D1, D2) mit einer einzigen Registrierung als zweite Endgeräte zur Anrufübernahme eines von einem dritten Endgerät (D4) an ein erstes Endgerät (D3) gerichteten Anrufs als Anrufübernahme-Gruppe am zentralen Server (DSS) registriert werden.

5. Verfahren nach Anspruch 2 und 3, **dadurch gekennzeichnet, dass** das zweite Endgerät (D1) mit einer einzigen Registrierung zur Anrufübernahme von an mehrere erste Endgeräte gerichteten Anrufen am zentralen Server (DSS) registriert wird.

6. Verfahren nach einem der Ansprüche 1 bis 5, **dadurch gekennzeichnet, dass** das allgemeine Vermittlungsprotokoll CSTA ist, und dass das lokale Vermittlungsprotokoll SIP oder oder ein vergleichbares Protokoll ist, und dass bei einem von einem dritten Endgerät (D4) an ein erstes Endgerät (D3) gerichteten Anruf zur Anrufübernahme durch ein zweites Endgerät (D1) über CSTA eine knotenübergreifende Signalisierung zum zentralen DSS-Server (DSS) erfolgt, und vom zentralen DSS-Server (DSS) anhand "CSTA: Delivered Events" am zweiten Endgerät "CSTA: SetLampMode" aktiviert wird.

7. Verfahren nach Anspruch 6, **dadurch gekennzeichnet, dass** das zweite Endgerät (D1) ein SIP-Endpoint ist und an diesem der vom dritten Endgerät (D4) an ein erstes Endgerät (D3) gerichtete Anruf mittels "SIP: Notify" signalisiert und durch "SIP: Invite" übernommen wird.

8. Computerprogrammprodukt zur Durchführung des Verfahrens gemäß einem der Ansprüche 1 bis 7.

9. Maschinenlesbarer Datenträger mit darauf gespeichertem Computerprogrammprodukt gemäß Anspruch 8.

10. Telekommunikationssystem, welches einen Netzverbund und
mehrere innerhalb des Netzverbundes angeordnete Vermittlungsknoten (10, 20, 30) mit einem jeweiligen lokalen Server (C1, C2, C3) und zugeordneten Endgeräten (D1, D2, D3, D4), sowie
einen zentralen DSS-Server (DSS) zur Steuerung des Telekommunikationssystems unter Verwendung eines allgemeinen Vermittlungsprotokolls umfasst,
wobei die Endgeräte (D1, D2, D3, D4) eines Vermittlungsknotens (10, 20, 30) durch den lokalen Server (C1, C2, C3) unter einem lokalen Protokoll gesteuert werden, welches Steuerungsbefehle zur knoteninternen Anrufübernahme zwischen innerhalb des Vermittlungsknotens (10, 20, 30) zur Anrufübernahme registrierten Endgeräten (D1, D2, D3, D4) umfasst, wobei eine Telekommunikationsverbindung durch Anrufübernahme eines von einem dritten Endgerät (D4) an ein erstes Endgerät (D3) gerichteten Anrufs durch ein zweites Endgerät (D1) aufbaubar ist, **dadurch gekennzeichnet,**
**dass** der zentrale DSS-Server (DSS) und die mehreren innerhalb des Netzverbundes angeordneten Vermittlungsknoten (10, 20, 30) dazu vorgesehen sind, die im lokalen Protokoll zur Anrufübernahme vorgesehenen Steuerungsbefehle in das allgemeine Vermittlungsprotokoll umzusetzen und durch den zentralen DSS-Server (DSS) den mehreren innerhalb des Netzverbundes angeordneten Vermittlungsknoten (10, 20, 30) knotenübergreifend zur Verfügung zu stellen,
wobei die im lokalen Protokoll vorgesehene Registrierung eines Endgeräts (D1, D2, D3, D4) zur Anrufübernahme in das allgemeine Vermittlungsprotokoll umgesetzt und an den zentralen DSS-Server (DSS) weitergeleitet wird,
wobei eine Telekommunikationsverbindung durch Anrufübernahme des von dem dritten Endgerät (D4) an ein einem ersten Vermittlungsknoten (10) zugeordnetes erstes Endgerät (D3) gerichteten Anrufs zu einem einem anderen, zweiten Vermittlungsknoten (20) zugeordneten zweiten Endgerät (D1) knotenübergreifend signalisierbar und aufbaubar ist,
wobei das Telekommunikationssystem zur Durchführung des Verfahrens nach einem der Ansprüche 1 bis 7 ausgebildet ist.
